# EUROPEAN PATENT APPLICATION

(11) **EP 1 548 339 A1**
(43) Date of publication of application: **29.06.2005**
(21) Application number: 03791262.3
(22) Date of filing: 25.08.2003
(51) Int. Cl.: F16J 15/52, B62D 1/20

(54) **DUST COVER FOR STEERING SHAFT**

(30) Priority: 27.08.2002 JP 2002246598
(71) Applicant: NSK LTD.,, Shinagawa-ku, Tokyo 141-8560 (JP)
(72) Inventor: Yamada, Takatsugu, NSK Ltd., Maebashi-shi, Gunma 371-0853 (JP); Takahashi, Kazunori, NSK Ltd., Maebashi-shi, Gunma 371-0853 (JP); Sato, Hiroshi, NSK Ltd., Maebashi-shi, Gunma 371-0853 (JP)
(74) Representative: Baldwin, Mark
(86) International application number: PCT/JP2003/010689
(87) International publication number: WO 2004/020879

(57) **Abstract**

A dust cover for a steering shaft attached to an vehicle body in such a way as to be in contact with the steering shaft to provide protection against dust and muddy water is provided with a cylindrical contact member that is to be in sliding contact with the steering shaft while the steering shaft is rotating and a cylindrical reinforcement member for reinforcing the cylindrical contact member provided radially outside the cylindrical contact member. A low friction material is attached, by coating or baking, to such a portion of the cylindrical contact member that is in contact with the steering shaft, or alternatively, the cylindrical contact member itself is made of a low friction member.

## Description

### TECHNICAL FIELD

The present invention relates to a dust cover for a steering shaft with which the steering torque of the steering shaft can be reduced and friction sound can be reduced.

### BACKGROUND ART

The dashpanel of a vehicle is provided with a through hole through which a steering shaft is inserted. A column hole cover is attached to that through hole. At the rear side end (with respect to the vehicle body) of the column hole cover, there is provided a dust cover for providing protection against dust and muddy water while being in contact with the steering shaft.

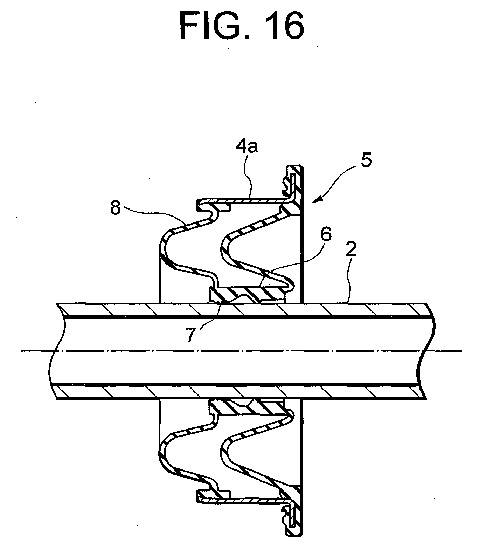

As shown in Fig. 16, the dust cover 5 is provided with a cylindrical contact portion 6 that is in sliding contact with the rotating steering shaft 2. On the radially inner side of the cylindrical contact portion 6, there is provided a sealing lip portion 7 effecting sealing function and sound insulating function with the steering shaft 2. Between the sliding portion 6 and the rear side end portion 4a of the column hole cover 4, there is provided a bellows portion 8 having elasticity.

When displacement of the steering shaft 2 such as decentering, twist, vibration or axial shift occurs due to an assembling error or an external force, the bellows portion 8 is adapted to deform elastically following the displacement such as decentering or twist so as to absorb the displacement. In addition, the bellows portion 8 is also adapted to provide sound insulating function.

In the dust cover 5 shown in Fig. 16, when displacement of the steering shaft 2 such as decentering or bending etc. occurs, the bellows portion 8 is expected to deform elastically following the displacement such as decentering or bending etc. so as to absorb the displacement.

However, in the case of the dust cover 5 shown in Fig. 16, the cylindrical contact portion 6 also deforms with the deformation of the bellows portion 8, since the cylindrical contact portion 6 is made solely of a rubber. As a result, friction of the elastically deformed cylindrical contact portion 6 against the rotating steering shaft 2 is increased to some extent, so that the steering torque of the steering shaft 2 is increased and sound is generated due to friction between the deformed cylindrical contact portion 6 and the steering shaft 2.

When the interference between the cylindrical contact portion 6 (or the sealing lip portion 7) and the steering shaft is made relatively small, the friction against the rotating steering shaft 2 becomes small. Thus, the steering torque of the steering shaft 2 can be reduced and sound generated by the friction between the cylindrical contact portion 6 and the steering shaft can be reduced. In that case, however, deterioration in sealing performance and sound insulation performance will result.

As per the above, when the interference of the cylindrical contact portion 6 (or the sealing lip portion 7) is made relatively large (or tight), sealing performance and sound insulation performance can be kept high, but then the friction against the rotating steering shaft 2 becomes relatively high and the steering torque of the steering shaft 2 is increased. On the other hand, when the interference of the cylindrical contact portion 6 (or the sealing lip portion 7) is made relatively small, the friction against the steering shaft 2 is reduced and the steering torque of the steering shaft 2 can be reduced, but then sealing performance and sound insulation performance are deteriorated.

### DISCLOSURE OF THE INVENTION

The present invention has been made in view of the above-described situation. An object of the present invention is to provide a dust cover for a steering shaft in which friction against the rotating steering shaft is reduced so as to reduce the steering torque of the steering shaft and sound generated by friction between the dust cover and the steering shaft while maintaining excellent sealing performance and sound insulation performance.

In order to achieve the above object, according to a first aspect of the present invention, there is provided a dust cover for a steering shaft attached to an vehicle body in such a way as to be in contact with the steering shaft to provide protection against dust and muddy water, comprising:
a cylindrical contact member that is to be in sliding contact with said steering shaft while said steering shaft is rotating; and
a cylindrical reinforcement member for reinforcing said cylindrical contact member provided radially outside the cylindrical contact member,
wherein a low friction material is attached, by coating or baking, to such a portion of said cylindrical contact member that is in contact with said steering shaft, or said cylindrical contact member itself is made of a low friction member.

As per the above, according to the first aspect of the present invention, a cylindrical contact member that is in sliding contact with the rotating steering shaft is provided, and a cylindrical reinforcement member for reinforcing the cylindrical contact member is provided radially outside the cylindrical contact member to enhance rigidity of the cylindrical contact member. Therefore, when a displacement of the steering shaft such as decentering, bending, vibration or axial shift occurs, the cylindrical contact member can move with the steering shaft always following the displacement such as decentering or bending etc. of the steering shaft.

In addition, since a low friction material is attached, by coating or baking, to such a portion of said cylindrical contact member that is in contact with the steering shaft, or the cylindrical contact member itself is made of a low friction member, the friction against the rotating shaft can be reduced and the steering torque of the steering shaft can be reduced.

In the dust cover for a steering shaft according to the present invention, the aforementioned low friction material may be one of a fluorine series resin, molybdenum, graphite and Teflon. With the use of one of a fluorine series resin, molybdenum, graphite and Teflon as the low friction material, the friction against the rotating steering shaft can be reduced favorably.

The dust cover for a steering shaft according to the first aspect of the present invention may be provided with a sealing lip portion that is in contact with said steering shaft to provide sealing function. In that case, since the cylindrical contact member with enhanced rigidity can always follow displacement of the steering shaft, the sealing lip portion is required to provide sealing only against bending or decentering due to the clearance (or play) between the cylindrical contact member and the steering shaft, and requirements for the sealing lip portion are significantly decreased.

Therefore, the sealing lip portion can provide sufficient sealing performance even if its interference is relatively small. Consequently, the friction against the rotating steering shaft can be reduced while maintaining favorable sealing and sound insulating performance. Thus, the steering torque of the steering shaft can be reduced and the sound generated by friction between the sealing lip portion and the steering shaft can be reduced.

Furthermore, in the dust cover for a steering shaft according to the first aspect of the present invention, a bellows portion having elasticity may be provided between said cylindrical reinforcement member and a portion attached to the vehicle body. With this feature, when displacement such as decentering or bending of the steering shaft occurs, the bellows portion can deform elastically following the displacement such as decentering or bending to absorb the displacement favorably.

According to a second aspect of the present invention, there is provided a dust cover for a steering shaft attached to an vehicle body in such a way as to be in contact with the steering shaft to provide protection against dust and muddy water, comprising:
a cylindrical contact member that is to be in sliding contact with said steering shaft while said steering shaft is rotating,
wherein a low friction material is attached, by coating or baking, to such a portion of said cylindrical contact member that is in contact with said steering shaft, or said cylindrical contact member itself is made of a low friction member.

As per the above, according to the second aspect of the present invention, a cylindrical contact member that is in sliding contact with the rotating steering shaft is provided, and the rigidity of the cylindrical contact member is made relatively high. Therefore, when a displacement of the steering shaft such as decentering, bending, vibration or axial shift occurs, the cylindrical contact member can move with the steering shaft always following the displacement such as decentering or bending etc. of the steering shaft. In addition, since a low friction material is attached, by coating or baking, to such a portion of said cylindrical contact member that is in contact with the steering shaft, or the cylindrical contact member itself is made of a low friction member, the friction against the rotating shaft can be reduced and the steering torque of the steering shaft can be reduced.

In the dust cover for a steering shaft according to the second aspect of the present invention, the aforementioned low friction material may be one of a fluorine series resin, molybdenum, graphite and Teflon. With this feature, the friction against the rotating steering shaft can be reduced favorably.

The dust cover for a steering shaft according to the second aspect of the present invention may be provided with a sealing lip portion that is in contact with said steering shaft to provide sealing function. In that case, in the dust cover for a steering shaft according to the second aspect of the present invention, since the cylindrical contact member can always follow displacement of the steering shaft, the sealing lip portion is required to provide sealing only against bending or decentering due to the clearance (or play) between the cylindrical contact member and the steering shaft, and requirements for the sealing lip portion are significantly decreased. Therefore, the sealing lip portion can provide sufficient sealing performance even if its interference is relatively small. Consequently, the friction against the rotating steering shaft can be reduced while maintaining favorable sealing and sound insulating performance. Thus, the steering torque of the steering shaft can be reduced and the sound generated by friction between the sealing lip portion and the steering shaft can be reduced.

Furthermore, in the dust cover for a steering shaft according to the second aspect of the present invention, a bellows portion having elasticity may be provided between said cylindrical contact member and a portion attached to the vehicle body. With this feature, when displacement such as decentering or bending of the steering shaft occurs, the bellows portion can deform elastically following the displacement such as decentering or bending to absorb the displacement favorably.

According to a third aspect of the present invention, there is provided a dust cover for a steering shaft attached to a vehicle body in such a way as to be in contact with the steering shaft to provide protection against dust and muddy water, comprising:
a cylindrical metal member that is to be in sliding contact with said steering shaft while said steering shaft is rotating,
wherein a low friction material is attached, by coating or baking, to such a portion of said cylindrical metal member that is in contact with said steering shaft.

As per the above, according to the third aspect of the present invention, a cylindrical metal member with high rigidity that is in sliding contact with the rotating steering shaft is provided. Therefore, when a displacement of the steering shaft such as decentering, bending, vibration or axial shift occurs, the cylindrical metal member can move with the steering shaft always following the displacement such as decentering or bending etc. of the steering shaft. In addition, since a low friction material is attached, by coating or baking, to such a portion of said cylindrical contact member that is in contact with the steering shaft, the friction against the rotating shaft can be reduced and the steering torque of the steering shaft can be reduced.

In the dust cover for a steering shaft according to the third aspect of the present invention, the aforementioned low friction material may be one of a fluorine series resin, molybdenum, graphite and Teflon. With this feature, the friction against the rotating steering shaft can be reduced favorably.

The dust cover for a steering shaft according to the third aspect of the present invention may be provided with a sealing lip portion that is in contact with said steering shaft to provide sealing function. In that case, since the cylindrical metal member can always follow displacement of the steering shaft, the sealing lip portion is required to provide sealing only against bending or decentering due to the clearance (or play) between the cylindrical metal member and the steering shaft, and requirements for the sealing lip portion are significantly decreased. Therefore, the sealing lip portion can provide sufficient sealing performance even if its interference is relatively small. Consequently, the friction against the rotating steering shaft can be reduced while maintaining favorable sealing and sound insulating performance. Thus, the steering torque of the steering shaft can be reduced and the sound generated by friction between the sealing lip portion and the steering shaft can be reduced.

Furthermore, in the dust cover for a steering shaft according to the third aspect of the present invention, a bellows portion having elasticity may be provided between said cylindrical metal member and a portion attached to the vehicle body. With this feature, when displacement such as decentering or bending of the steering shaft occurs, the bellows portion can deform elastically following the displacement such as decentering or bending to absorb the displacement favorably.

According to a fourth aspect of the present invention, there is provided a dust cover for a steering shaft attached to an vehicle body in such a way as to be in contact with the steering shaft to provide protection against dust and muddy water, comprising:
a cover side cylindrical contact member attached to said dust cover;
a cylindrical reinforcement member for reinforcing said cover side cylindrical contact member provided radially outside the cover side cylindrical contact member; and
a shaft side cylindrical contact member attached to said steering shaft that is to be in sliding contact with said cover side cylindrical contact member.

As per the above, according to the fourth aspect of the present invention, a cover side cylindrical contact member attached to said dust cover, a cylindrical reinforcement member for reinforcing said cover side cylindrical contact member provided radially outside the cover side cylindrical contact member, and a shaft side cylindrical contact member attached to said steering shaft that is to be in sliding contact with said cover side cylindrical contact member are provided. Therefore, rigidity of the two cylindrical contact members can be enhanced so that when a displacement of the steering shaft such as decentering, bending, vibration or axial shift occurs, both the cylindrical contact members can move with the steering shaft always following the displacement such as decentering or bending etc. of the steering shaft.

In the dust cover for a steering shaft according to the fourth aspect of the present invention, it is preferable that a low friction material be attached, by coating or baking, to at least one of such portions of the cylindrical contact members at which they are in contact, or at least one of said cylindrical contact members themselves is made of a low friction material.

As per the above, according to the fourth aspect of the present invention, when a low friction material is attached, by coating or baking, to at least one of such portions of the cylindrical contact members at which they are in contact, or at least one of said cylindrical contact members themselves is made of a low friction material, the friction against the rotating shaft can be reduced and the steering torque of the steering shaft can be reduced. In addition, stable friction can be realized irrespective of surface roughness of the steering shaft and dimension errors of the steering shaft.

In the dust cover for a steering shaft according to the fourth aspect of the present invention, the aforementioned low friction material may be one of a fluorine series resin, molybdenum, graphite and Teflon. With this feature, the friction against the rotating steering shaft can be reduced favorably.

The dust cover for a steering shaft according to the fourth aspect of the present invention may be provided with a sealing lip portion that is in contact with said steering shaft to provide sealing function. In that case, since the cylindrical contact members with enhanced rigidity can always follow displacement of the steering shaft, the sealing lip portion is required to provide sealing only against bending or decentering due to the clearance (or play) between the cylindrical contact members and the steering shaft, and requirements for the sealing lip portion are significantly decreased. Therefore, the sealing lip portion can provide sufficient sealing performance even if its interference is relatively small. Consequently, the friction against the rotating steering shaft can be reduced while maintaining favorable sealing and sound insulating performance. Thus, the steering torque of the steering shaft can be reduced and the sound generated by friction between the sealing lip portion and the steering shaft can be reduced.

Furthermore, in the dust cover for a steering shaft according to the fourth aspect of the present invention, a bellows portion having elasticity may be provided between said cylindrical reinforcement member and a portion attached to the vehicle body. With this feature, when displacement such as decentering or bending of the steering shaft occurs, the bellows portion can deform elastically following the displacement such as decentering or bending to absorb the displacement favorably.

### BRIEF DESCRIPTION OF THE DRAWINGS

Fig. 1 is a cross sectional view showing a dust cover for a steering shaft according to a first embodiment of the present invention.
Fig. 2 is a cross sectional view showing a dust cover for a steering shaft according to a second embodiment of the present invention.
Fig. 3 is a cross sectional view showing a dust cover for a steering shaft according to a third embodiment of the present invention.
Fig. 4 is a cross sectional view showing a dust cover for a steering shaft according to a fourth embodiment of the present invention.
Fig. 5 is a cross sectional view showing a dust cover for a steering shaft according to a fifth embodiment of the present invention.
Fig. 6 is a cross sectional view showing a dust cover for a steering shaft according to a sixth embodiment of the present invention.
Fig. 7 is a cross sectional view showing a dust cover for a steering shaft according to an seventh embodiment of the present invention.
Fig. 8 is a cross sectional view showing a dust cover for a steering shaft according to an eighth embodiment of the present invention.
Fig. 9 is a cross sectional view showing a dust cover for a steering shaft according to a ninth embodiment of the present invention.
Fig. 10 is a cross sectional view showing a dust cover for a steering shaft according to an tenth embodiment of the present invention.
Fig. 11 is a cross sectional view showing a dust cover for a steering shaft according to an eleventh embodiment of the present invention.
Fig. 12 is a cross sectional view showing a dust cover for a steering shaft according to a twelfth embodiment of the present invention.
Fig. 13 is a cross sectional view showing a dust cover for a steering shaft according to a thirteenth embodiment of the present invention.
Fig. 14 is a cross sectional view showing the principal portion of a dust cover for a steering shaft according to a fourteenth embodiment of the present invention.
Fig. 15 is a cross sectional view showing the dashpanel and the steering shaft of a vehicle in which a dust cover according to the aforementioned embodiments of the present invention is assembled.
Fig. 16 is a cross sectional view showing a dust cover for a steering shaft according to a prior art.

### EMBODIMENTS OF THE INVENTION

In the following, embodiments of the dust cover for a steering shaft according to the present invention will be described with reference to the drawings.

### (First Embodiment)

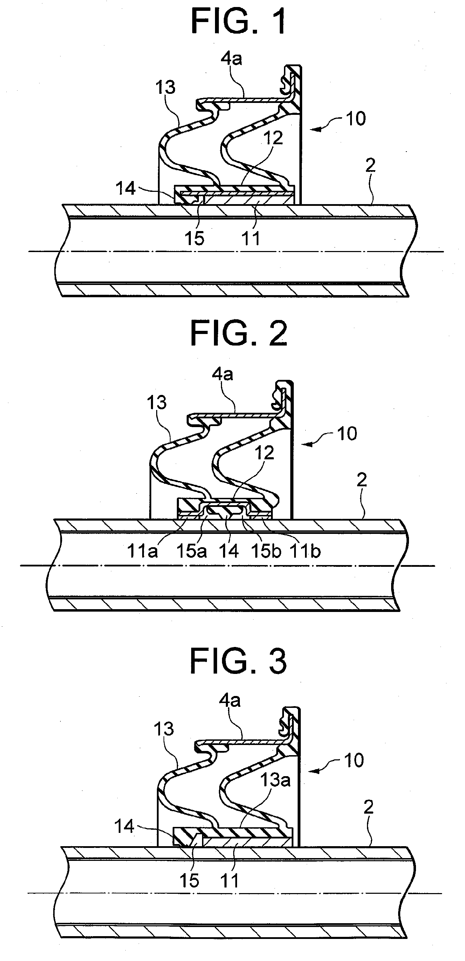

Fig. 1 is a cross sectional view showing a dust cover for a steering shaft according to the first embodiment of the present invention.

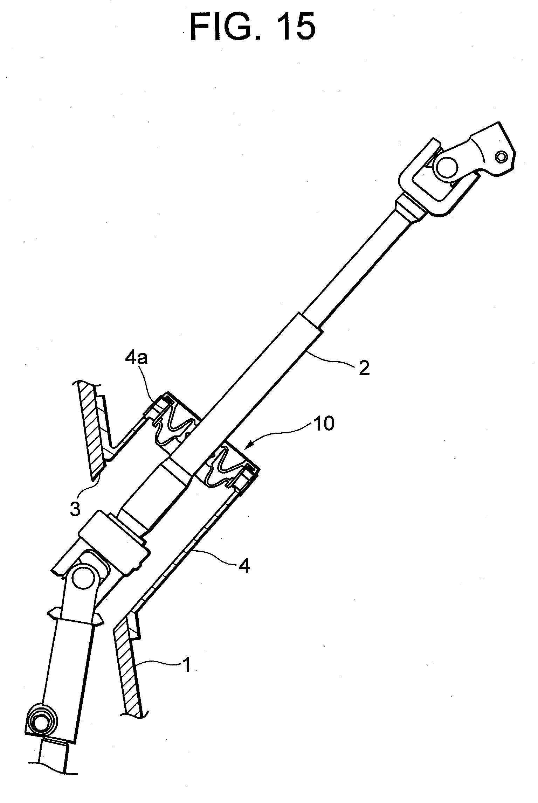

As shown in Fig. 15, the dashpanel 1 of a vehicle is provided with a through hole 3 through which a steering shaft 2 is inserted. A column hole cover 4 is attached to the through hole 3. At the rear side end (with respect to the vehicle body) 4a of the column hole cover 4, there is provided a dust cover 10 that provides protection against dust and muddy water etc. while being in contact with the steering shaft 2.

The dust cover 10 is provided with a cylindrical contact member 11 in the form of a sliding bushing that is in sliding contact with the rotating steering shaft 2, an iron pipe 12 serving as a cylindrical reinforcement member for reinforcing the cylindrical contact member 11 provided on the radially outer periphery of the cylindrical contact member 11, double bellows portions 13 having elasticity provided between the cylindrical reinforcement member 12 and the rear side (with respect to the vehicle body) end portion 4a of the column hole cover 4, and a sealing lip portion 14 that is in contact with the steering shaft 2 to provide sealing. The radially outer periphery of the double bellows portion 13 is attached to the column hole cover 4 all along its entire circumference.

In this embodiment, the iron pipe 12, the bellows portion 13, which is made of a rubber or the like, and the sealing lip portion, which is made of a rubber or the like, are integrally formed, and the bushing 11 having a measure of thickness is press-fitted inside the iron pipe 12. The sealing lip portion 14 is integral with the bellows portion 13 and disposed radially inside the end portion of the iron pipe 12. In addition, a grease pocket 15 is provided between one end of the sealing lip portion 14 and the sliding bushing 11.

On such a portion of the sliding bushing 11 that is in contact with the steering shaft 2 (i.e. on the inner circumferential surface of the bushing 11), a low friction material is attached by coating or baking. The low friction material is selected from, for example, a fluorine series resin, molybdenum, graphite, Teflon and other materials. A sliding bushing 11 which, in itself, is made of a low friction material may be used instead of the sliding bushing on which a low friction material is attached by coating or baking.

In such a structure, the sliding bushing 11 that is to be in sliding contact with the rotating shaft 2 is provided, and the iron pipe 12 is provided on the radially outer periphery of the sliding bushing 11 to reinforce the sliding bushing 11.

Therefore, when displacement (such as decentering, bending, vibration or axial shift etc.) of the steering shaft occurs, the sliding bushing 11 can move together with the steering shaft 2 always following the displacement such as decentering or bending etc. of the steering shaft 2.

In connection with this, since the bushing has a measure of thickness, the degree of twist in connection with the clearance between the sliding bushing 11 and the steering shaft 2 can be made small accordingly.

In addition, since a low friction material is attached on the inner circumferential surface of the sliding bushing 11 that is in contact with the steering shaft 2 by coating or baking, or the sliding bushing itself is made of a low friction material, the friction against the rotating steering shaft 2 can be made low. Thus, the steering torque of the steering shaft 2 can be reduced and sound generated by friction of the sliding bushing 11 and the steering shaft 2 can be reduced.

Furthermore, since the sliding bushing 11 with an increased rigidity can always follow displacement of the steering shaft 2, the sealing lip portion 14 is required to provide sealing only against bending or decentering due to the clearance (or play) between the sliding bushing 11 and the steering shaft 2. Therefore, requirements for the sealing lip portion 14 are not much and it is sufficient for the sealing lip portion 14 to meet minimum essential performance requirements.

Therefore, the sealing lip portion 14 can provide sufficient sealing performance even if its interference is relatively small. Consequently, the friction against the rotating steering shaft 2 can be reduced while maintaining favorable sealing and sound insulating performance. Thus, the steering torque of the steering shaft 2 can be reduced and the sound generated by friction between the sealing lip portion 14 and the steering shaft 2 can be reduced.

It is preferable that the clearance between the sliding bushing 11 and the steering shaft 2 be smaller than 1mm and the interference of the sealing lip portion 14 and the steering shaft 2 be smaller than 1mm.

Since the requirements for the sealing lip portion 14 are not much and it is sufficient for the sealing lip portion 14 to meet minimum essential performance requirements, freedom of design of the shape of the sealing portion is increased, and the friction against the steering shaft 2 can be reduced. In addition, it is possible to provide the grease pocket 15 as described above to avoid running out of grease so that friction sound can be reduced greatly.

Furthermore, when displacement (such as decentering or bending) of the steering shaft 2 occurs, the bellows portion 13 can deform elastically following the displacement such as decentering or bending to absorb the displacement favorably.

### (Second Embodiment)

Fig. 2 is a cross sectional view showing a dust cover for a steering shaft according to the second embodiment of the present invention.

This embodiment differs from the first embodiment in the structure of the radially inner portion of the dust cover 10. In the arrangement of the second embodiment, an iron pipe 12 has small diameter portions at both axial ends and a large diameter portion at the center. The sliding bushing 11 integral with the iron pipe 12 is composed of a pair of narrow sliding bushing parts 11a and 11b that are spaced apart from each other by a certain distance. A sealing lip portion 14 is disposed between the sliding bushing parts 11a and 11b. At both sides of the sealing lip portion 14, there is provided grease pockets 15a and 15b.

The pair of sliding bushing parts 11a and 11b are narrow but spaced apart from each other. Therefore, they can move following displacement of the steering shaft 2. Thus, the advantageous effects same as those of the first embodiment can be realized.

Since the two grease pockets 15a and 15b are provided on both sides of the sealing lip portion 14, lubricity higher than in the first embodiment is attained. In addition, running out of grease can be prevented and friction sound can be reduced greatly.

Furthermore, a low friction material is attached on the inner circumferential surface of the sliding bushing 11a, 11b that is in contact with the steering shaft 2 by coating or baking, or the sliding bushing 11a, 11b itself is made of a low friction material. Therefore, the friction against the rotating steering shaft 2 can be made low. Thus, the steering torque of the steering shaft 2 can be reduced and sound generated by friction of the sliding bushing 11 and the steering shaft 2 can be reduced.

### (Third Embodiment)

Fig. 3 is a cross sectional view showing a dust cover for a steering shaft according to the third embodiment of the present invention.

This embodiment differs from the first embodiment in the structure of the radially inner portion of the dust cover 10. In the arrangement of the third embodiment, the cylindrical reinforcement member (i.e. iron pipe) 12 is not provided, and a sliding bushing 11 is press-fitted into the inner circumferential portion 13a of the bellows portion 13. In this embodiment also, a low friction material is attached on such a portion of the sliding bushing 11 that is in contact with the steering shaft 2 (i.e. the inner circumferential surface of the bushing 11) by coating or baking or the sliding bushing 11 itself is made of a low friction material. Therefore, the friction of the sliding bushing 11a, 11b against the rotating steering shaft 2 can be made low. Consequently, the steering torque of the steering shaft 2 can be reduced and sound generated by friction of the sliding bushing 11 and the steering shaft 2 can be reduced. In addition, the advantageous effects same as the above-described embodiments can also be attained by this embodiment. At one end of the inner circumferential portion 13a, a sealing lip 14 is integrally formed, so that an annular grease pocket 15 is formed.

It is necessary for the sliding bushing 11 to have a certain degree of rigidity. Therefore, reinforcement of the rigidity of the busing is intended by providing a reinforcing rib on the outer circumference of the bushing, using a bushing having no slit (seamless), or using a thick bushing.

### (Fourth Embodiment)

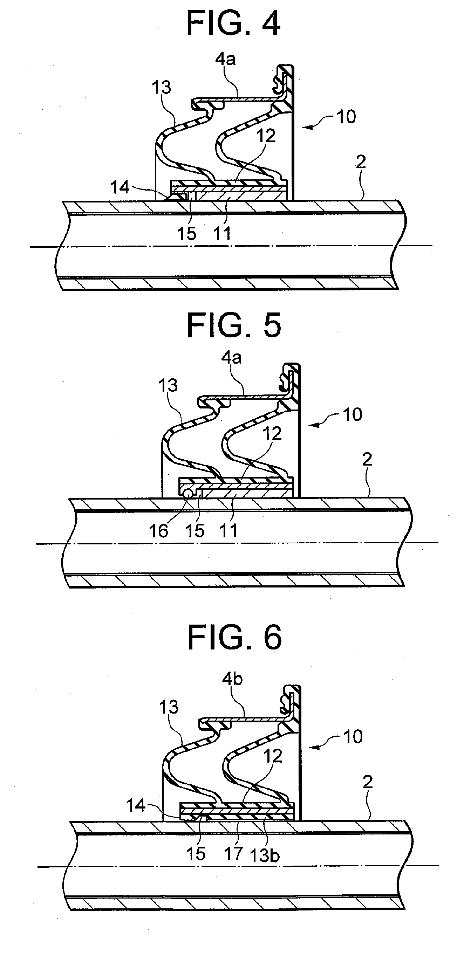

Fig. 4 is a cross sectional view showing a dust cover for a steering shaft according to the fourth embodiment of the present invention.

This embodiment differs from the first embodiment shown in Fig. 1 in the structure of the radially inner portion of the dust cover 10. In the arrangement of the fourth embodiment, a sealing lip portion 14 is provided as a separate member and the sealing lip portion 14 is press-fitted to an end of an iron pipe 12 at the side opposite to a sliding bushing 11. In this embodiment also, the advantageous effects same as those of the above-described embodiments can be realized.

### (Fifth Embodiment)

Fig. 5 is a cross sectional view showing a dust cover for a steering shaft according to the fifth embodiment of the present invention.

In this embodiment, instead of the sealing lip portion 14, an O-ring 16 is provided at one end of an iron pipe 12 at the side opposite to a sliding bushing 11, contrary to the first embodiment shown in Fig. 1. In this embodiment also, the advantageous effects same as those of the above-described embodiments can be realized.

### (Sixth Embodiment)

Fig. 6 is a cross sectional view showing a dust cover for a steering shaft according to the sixth embodiment of the present invention.

This embodiment differs from the first embodiment shown in Fig. 1 in the structure of the radially inner portion. The arrangement of the sixth embodiment is not provided with a sliding bushing 11 and an iron pipe 12 is provided integrally with a bellows portion 13 made of a rubber or the like. The inner circumferential portion 13b of the bellows portion 13 is the same member as the bellows portion 13, as is the case with the first embodiment. The inner circumferential portion 13b serves as a cylindrical contact member, and a low friction material 17 is attached on the inner circumferential portion 13b by coating or baking. The inner circumferential portion 13b and the bellows portion 13 may be formed by different materials and the inner circumferential portion 13b itself may be made of a low friction material. Preferably, the low friction material 17 is a fluorine series resin, molybdenum, graphite or Teflon. With use of these materials, the friction against the steering shaft 2 can be made low. In this embodiment also, the advantageous effects same as those of the above-described embodiments can be realized.

### (Seventh Embodiment)

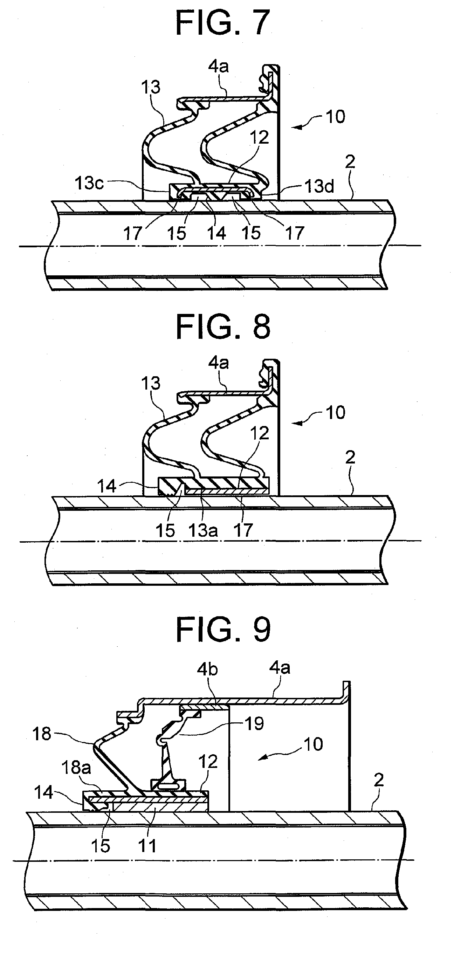

Fig. 7 is a cross sectional view showing a dust cover for a steering shaft according to the seventh embodiment of the present invention.

This embodiment differs from the second embodiment shown in Fig. 2 in the structure of the radially inner portion. The arrangement of the seventh embodiment is not provided with a sliding bushing 11a, 11b, and an iron pipe 12 is integrally embedded in a bellows portion 13 made of a rubber or the like. The inner circumferential end portions 13c and 13d of the bellows portion 13 serve as the cylindrical contact portion as is the case with the sixth embodiment. A low friction material 17 is attached on both the inner circumferential end portions 13c and 13d. Both ends of the iron pipe 12 corresponding to the inner circumferential end portions 13c and 13d are bent toward the steering shaft so that the iron pipe 12 has a substantially U-shaped cross section. Between the inner circumferential end portions 13c and 13d of the bellows portion 13, there is provided a sealing portion 14 that extends radially inwardly so as to be in contact with the outer circumference of the steering shaft 2. The inner circumferential end portions 13c and 13d themselves may be made of a low friction material. Preferably, the low friction material is a fluorine series resin, molybdenum, graphite or Teflon. With use of these materials, the friction against the steering shaft 2 can be made low. In this embodiment also, the advantageous effects same as those of the above-described embodiments can be realized.

### (Eighth Embodiment)

Fig. 8 is a cross sectional view showing a dust cover for a steering shaft according to the eighth embodiment of the present invention.

This embodiment differs from the second embodiment in the structure of the radially inner portion. The arrangement of the eighth embodiment is not provided with a sliding bushing 11 and an iron pipe 12 is integrally formed on the inner circumferential portion 13a of a bellows portion 13 made of a rubber or the like. The iron pipe 12 serves as a cylindrical metal member that is in sliding contact with the rotating steering shaft 2. A low friction material 17 is attached on the inner circumference of the iron pipe 12. The low friction material 17 may be selected from, for example, a fluorine series resin, molybdenum, graphite or Teflon. With use of these materials, the friction against the steering shaft 2 can be made low. A sealing lip 14 is integrally formed at one end of the inner circumferential portion 13a of the bellows portion 13. A grease pocket 15 is formed between the sealing lip 14 and one end face of the iron pipe 12. In this embodiment also, the advantageous effects same as those of the above-described embodiments can be realized.

### (Ninth Embodiment)

Fig. 9 is a cross sectional view showing a dust cover for a steering shaft according to the ninth embodiment of the present invention.

The dust cover of this embodiment is provided with a first bellows portion 18 and a second bellows portion 19, which are separately formed, instead of the bellows portion 13 in the first embodiment. The inner circumferential portion 18a of the first bellows portion 18 is formed integrally with a sealing lip portion 14 and an iron pipe 12. A sliding bushing 11 is press-fitted radially inside the iron pipe 12, and a grease pocket 15 is formed between the sealing lip portion 14 and the sliding bushing 11. On such a portion of the sliding bushing 11 that is in contact with the steering shaft 2 (i.e. the inner circumferential surface of the bushing 11), a low friction material is attached by coating or baking. The low friction material is selected from, for example, a fluorine series resin, molybdenum, graphite, Teflon and other materials. A sliding bushing 11 which, in itself, is made of a low friction material may be used instead of the sliding bushing on which a low friction material is attached by coating or baking. The radially outer periphery of the first bellows portion 18 is attached to the front end inner circumference of the column hole cover 4 along its entire circumference in a manner similar to the first embodiment. The second bellows portion 19 is disposed in the rear side (with respect to the vehicle body) of the first bellows portion 18. On the radially outer portion of the second bellows portion 19, an iron pipe 4b is integrally formed. The iron pipe 4b is press-fitted into the inner circumference of the column hole cover 4. The radially inner portion of the second bellows portion 19 is press-fitted onto the outer circumference of the first bellows portion 18. In this embodiment also, the advantageous effects same as those of the above-described embodiments can be realized.

### (Tenth Embodiment)

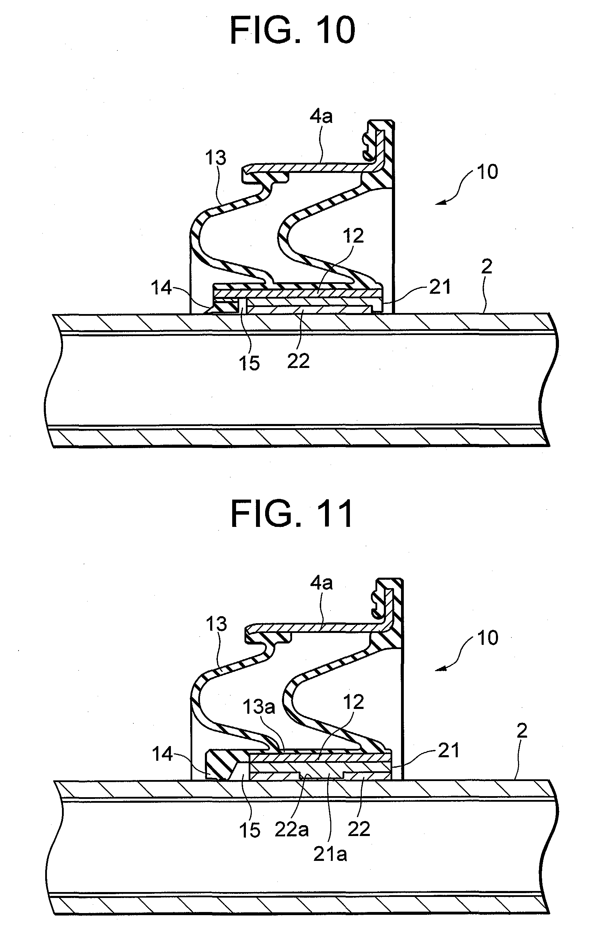

Fig. 10 is a cross sectional view showing a dust cover for a steering shaft according to the tenth embodiment of the present invention.

This embodiment differs from the first embodiment in the structure of the radially inner portion. The arrangement of this embodiment is provided with a cover side cylindrical contact member 21 integrally attached to the dust cover 10 and a shaft side cylindrical contact member 22 attached to the steering shaft 2. The shaft side cylindrical contact member 22 is in sliding contact with the cover side cylindrical contact member 21. Preferably, the cover side cylindrical contact member 21 and the shaft side cylindrical contact member 22 are sliding bushings. A low friction material is attached, by coating or baking, to at least one of the portions of the cylindrical contact members 21, 22 that are in contact with the other member. In connection with this, at least one of the cylindrical contact members 21, 22 may be made of a low friction material. Preferably, the low friction material is, for example, a fluorine series resin, molybdenum, graphite, Teflon or other materials. In this embodiment, stable friction is realized irrespective of the surface roughness of the main shaft or errors in dimension. In the arrangement of this embodiment, one end of the iron pipe 12 extends radially inwardly so as to have a substantially L-shaped cross section. To the other end of the iron pipe 12, a separate sealing lip portion 14 is attached. In this embodiment also, the advantageous effects same as those of the above-described embodiments can be realized.

### (Eleventh Embodiment)

Fig. 11 is a cross sectional view showing a dust cover 10 for a steering shaft according to the eleventh embodiment of the present invention.

This embodiment differs from the first embodiment in the structure of the radially inner portion. In the arrangement of this embodiment, a cover side cylindrical contact member 21 is integrally attached to the radially inner portion 13a of a bellows portion 13 and an iron pipe 12, and a shaft side cylindrical contact member 22 is attached to the steering shaft 2. The shaft side cylindrical contact member 22 is in sliding contact with the cover side cylindrical contact member 21.

On substantially central portions of the cover side cylindrical contact member 21 and the shaft side cylindrical member 22, there is formed a convex portion 21a and a concave portion 22a fitting therewith respectively.

Preferably, the cover side cylindrical contact member 21 and the shaft side cylindrical contact member 22 are sliding bushings. A low friction material is attached, by coating or baking, to at least one of the portions of the cylindrical contact members 21, 22 that are in contact with the other member. In connection with this, at least one of the cylindrical contact members 21, 22 may be made of a low friction material. The low friction material is selected from, for example, a fluorine series resin, molybdenum, graphite, Teflon and other materials. With the above feature, axial displacement of the main shaft and the dust seal upon provisional assembling will be avoided and operationality is improved. A sealing lip portion 14 is formed integrally at one end of the radially inner portion 13a of the bellows portion 13 made of a rubber or the like. In this embodiment also, the advantageous effects same as those of the above-described embodiments can be realized.

### (Twelfth Embodiment)

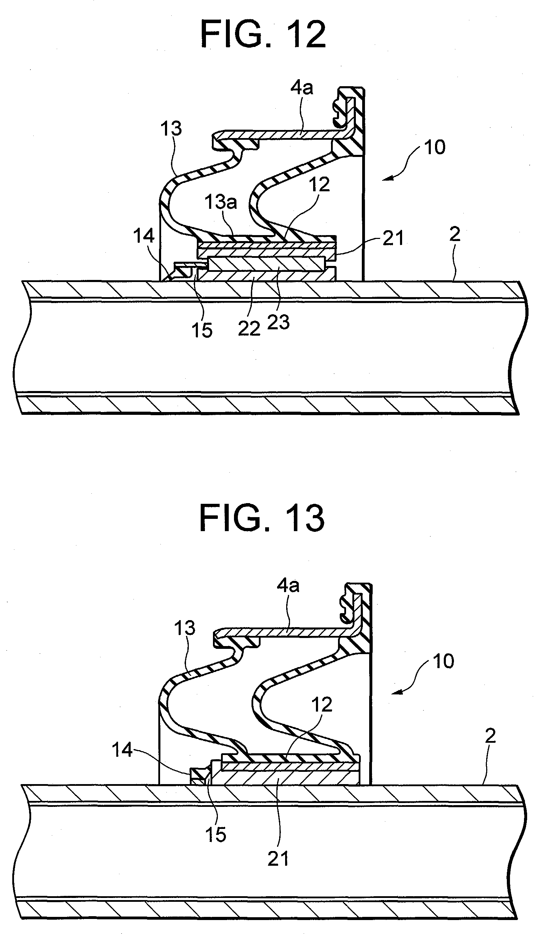

Fig. 12 is a cross sectional view showing a dust cover for a steering shaft according to the twelfth embodiment of the present invention.

This embodiment differs from the first embodiment in the structure of the radially inner portion. In the arrangement of this embodiment, the radially inner portion 13a of the dust cover 10, an iron pipe 12 and a cover side cylindrical contact member 21 are integrally formed and a shaft side cylindrical contact member 22 that is in sliding contact with the cover side cylindrical contact member 21 is attached to the steering shaft 2.

At both ends of the cover side cylindrical contact member 21, flange portions extending radially inwardly are formed along the entire circumference. At both ends of the shaft side cylindrical contact member 22, flange portions extending radially outwardly are formed.

Between the cover side cylindrical contact member 21 and the shaft side cylindrical contact member 22, there is provided a third cylindrical contact member 23.

Preferably, the cover side cylindrical contact member 21, the shaft side cylindrical contact member 22 and the third cylindrical contact member 23 are sliding bushings. A low friction material is attached, by coating or baking, to at least one of the portions of the cylindrical contact members 21, 22, 23 that are in contact with another member. In connection with this, at least one of the cylindrical contact members 21, 22, 23 may be made of a low friction material. The low friction material is, for example, a fluorine series resin, molybdenum, graphite, Teflon or other materials. With use of these materials, the friction against the steering shaft 2 can be reduced. A sealing lip portion 14 is provided at one end of the third cylindrical contact member 23. The sealing lip portion 14 extends in the axial direction out of the gap between the cover side cylindrical contact member 21 and the shaft side cylindrical contact member 22. A grease pocket 15 is formed between the sealing lip portion 14 and the cylindrical contact member 22. In this embodiment also, the advantageous effects same as those of the above-described embodiments can be realized.

### (Thirteenth Embodiment)

Fig. 13 is a cross sectional view showing a dust cover for a steering shaft according to the thirteenth embodiment of the present invention.

In this embodiment, a cover side cylindrical contact member 21 attached to the dust cover 10 is added to the arrangement of the first embodiment. Preferably, the cover side cylindrical contact member 21 is a sliding bushing. The cover side cylindrical contact member 21 has a flange portion extending radially outwardly at one end thereof. A low friction material is attached to such a portion of the cover side cylindrical contact member 21 that is in contact with the steering shaft 2 (i.e. the inner circumferential surface of the cover side cylindrical contact member 21) by coating or baking. The cover side cylindrical contact member 21 itself may be made of a low friction material. The low friction material may be selected from, for example, a fluorine series resin, molybdenum, graphite, Teflon and other materials. With use of these materials, the friction against the steering shaft 2 can be reduced.

A sealing lip portion 14 is formed separately from the radially inner portion 13a that is integral with a bellows portion 13. The sealing lip portion 14 is fixed to the steering shaft 2 by press-fitting and the tip end projection thereof is in contact with the flange portion of the cover side cylindrical contact member 21. In this embodiment also, the advantageous effects same as those of the above-described embodiments can be realized.

### (Fourteenth Embodiment)

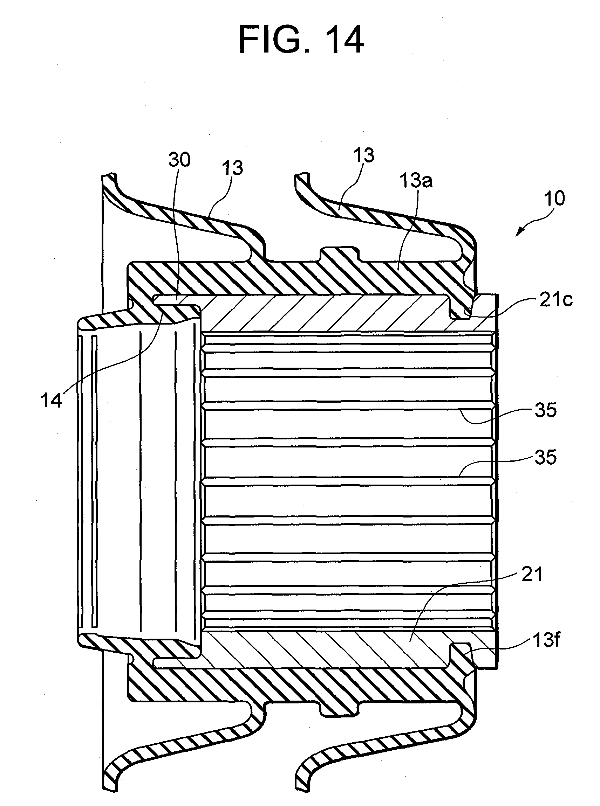

Fig. 14 is a cross sectional view showing the principal portion of a dust cover for a steering shaft according to fourteenth embodiment of the present invention. In Fig. 14, illustration of the joining portion of the dust cover 10 and the column hole cover 4 is omitted unlike with Figs. 1 to 13. In addition, illustration of the steering shaft 2 is also omitted.

In the arrangement of this embodiment, a sliding bushing 21 is integrally formed on the inner side of the radially inner cylindrical portion 13a of a double bellows portion 13. An annular groove 21c is formed on the outer circumference of the sliding bushing 21 in the vicinity of one end thereof (the right side end in Fig. 14). An annular projection 13f that extends radially inwardly from one end (i.e. the right side end in Fig. 14) of the radially inner cylindrical portion 13a is fitted in the annular groove 21c. The other end (the left side end in Fig. 14) of the radially inner cylindrical portion 13a extends radially inwardly, and on the inner circumference thereof, a sealing lip portion 14 extending in both axial directions is integrally formed. Between the axially inner side (i.e. the right side in Fig. 14) extension of the sealing lip portion 14 and the radially inner cylindrical portion, an annular space 30 is formed. The other end of the sliding bushing 21 (i.e. the left side end in Fig. 14) is projecting into that annular space 30.

In the arrangement of this embodiment, a number of grooves 35 serving as grease pockets extending substantially in parallel with the axial direction are formed on the inner circumference of the sliding bushing 21.

The sliding bushing 21 in the fourteenth embodiment is also made of a low friction material, or alternatively a low friction material is attached to the sliding bushing 21 as in the case with the above-described embodiments.

Although embodiments of the present invention have been described in the foregoing, the present invention is not limited to those embodiments, but various modification can be made to them.

## Claims

1. A dust cover for a steering shaft attached to an vehicle body in such a way as to be in contact with the steering shaft to provide protection against dust and muddy water, comprising:
a cylindrical contact member that is to be in sliding contact with said steering shaft while said steering shaft is rotating; and
a cylindrical reinforcement member for reinforcing said cylindrical contact member provided radially outside the cylindrical contact member,
wherein a low friction material is attached, by coating or baking, to such a portion of said cylindrical contact member that is in contact with said steering shaft, or said cylindrical contact member itself is made of a low friction member.

2. A dust cover for a steering shaft according to claim 1, wherein said low friction material is one of a fluorine series resin, molybdenum, graphite and Teflon.

3. A dust cover for a steering shaft according to claim 1 or 2, wherein said dust cover is provided with a sealing lip portion that is in contact with said steering shaft to provide sealing function.

4. A dust cover for a steering shaft according to claim 1 or 2, wherein a bellows portion having elasticity is provided between said cylindrical reinforcement member and a portion attached to the vehicle body.

5. A dust cover for a steering shaft attached to a vehicle body in such a way as to be in contact with the steering shaft to provide protection against dust and muddy water, comprising:
a cylindrical contact member that is to be in sliding contact with said steering shaft while said steering shaft is rotating,
wherein a low friction material is attached, by coating or baking, to such a portion of said cylindrical contact member that is in contact with said steering shaft, or said cylindrical contact member itself is made of a low friction member.

6. A dust cover for a steering shaft according to claim 5, wherein said low friction material is one of a fluorine series resin, molybdenum, graphite and Teflon.

7. A dust cover for a steering shaft according to claim 5 or 6, wherein said dust cover is provided with a sealing lip portion that is in contact with said steering shaft to provide sealing function.

8. A dust cover for a steering shaft according to claim 5 or 6, wherein a bellows portion having elasticity is provided between said cylindrical contact member and a portion attached to the vehicle body.

9. A dust cover for a steering shaft attached to an vehicle body in such a way as to be in contact with the steering shaft to provide protection against dust and muddy water, comprising:
a cylindrical metal member that is to be in sliding contact with said steering shaft while said steering shaft is rotating,
wherein a low friction material is attached, by coating or baking, to such a portion of said cylindrical metal member that is in contact with said steering shaft.

10. A dust cover for a steering shaft according to claim 9, wherein said low friction material is one of a fluorine series resin, molybdenum, graphite and Teflon.

11. A dust cover for a steering shaft according to claim 9 or 10, wherein said dust cover is provided with a sealing lip portion that is in contact with said steering shaft to provide sealing function.

12. A dust cover for a steering shaft according to claim 9 or 10, wherein a bellows portion having elasticity is provided between said cylindrical metal member and a portion attached to the vehicle body.

13. A dust cover for a steering shaft attached to an vehicle body in such a way as to be in contact with the steering shaft to provide protection against dust and muddy water, comprising:
a cover side cylindrical contact member attached to said dust cover;
a cylindrical reinforcement member for reinforcing said cover side cylindrical contact member provided radially outside the cover side cylindrical contact member;
a shaft side cylindrical contact member attached to said steering shaft that is to be in sliding contact with said cover side cylindrical contact member.

14. A dust cover for a steering shaft according to claim 13, wherein a low friction material is attached, by coating or baking, to at least one of such portions of said cylindrical contact members at which they are in contact, or at least one of said cylindrical contact members themselves is made of a low friction material.

15. A dust cover for a steering shaft according to claim 14, wherein said low friction material is one of a fluorine series resin, molybdenum, graphite and Teflon.

16. A dust cover for a steering shaft according to claim 13 or 14, wherein said dust cover is provided with a sealing lip portion that is in contact with said steering shaft to provide sealing function.

17. A dust cover for a steering shaft according to claim 13 or 14, wherein a bellows portion having elasticity is provided between said cylindrical reinforcement member and a portion attached to the vehicle body.
